# EUROPÄISCHE PATENTSCHRIFT

(11) **EP 0 366 104 B1**
(45) Veröffentlichungstag und Bekanntmachung des Hinweises auf die Patenterteilung: **27.07.1994**
(21) Anmeldenummer: 89119791.5
(22) Anmeldetag: 25.10.1989
(51) Int. Cl.: B65G 53/42, B65G 53/28, B65G 53/14

(54) **Fördervorrichtung in Form eines Sendegerätes für staubförmige oder feinkörnige Güter**
Conveyor device in the shape of a dispatch station for a pulverulent or powdery material
Dispositif de transport sous la forme d'une station d'envoi de matières pulvérulentes ou poudreuses

(30) Priorität: 26.10.1988 DE 3836380
(43) Veröffentlichungstag der Anmeldung: 02.05.1990
(73) Patentinhaber: Kisilowski, Richard, D-22177 Hamburg (DE)
(72) Erfinder: Kisilowski, Richard, D-22177 Hamburg (DE)
(74) Vertreter: Hansmann, Dierk, Dipl.-Ing.

(56) Entgegenhaltungen:
- DE-A- 133 410
- DE-A- 1 431 782
- DE-A- 1 913 026
- DE-A- 3 439 806
- DE-B- 1 182 594
- FR-A- 2 357 452
- FR-E- 92 502
- GB-A- 1 362 509

## Beschreibung

Die Erfindung bezieht sich auf eine Fördervorrichtung in Form eines Sendegerätes für staubförmige oder feinkörnige Güter zum Transport in Förderleitungen mit einem Gas, insbesondere Luft, als Fördermittel, wobei das Sendegerät als ein einer Förderleitung vorgeschaltetes Rohrelement ausgebildet ist, und wobei das Gas dem zu transportierenden Fördergut im Bereich eines Einlasses des Rohrelementes über eine zugeordnete Düse zugeführt wird und wobei eine Abdichtung vor dem Einlaß durch das nachströmende Fördergut durchführbar ist, wobei das Rohrelement eine integrierte Düse zur Fördermittelzuführung und eine der Düse nachgeschaltete Einschnürung aufweist.

Derartige Sendegeräte sind in vielfältigen Ausführungen bekannt und dienen dazu, das Fördergut in Rohrleitungen einzuschleusen sowie zu transportieren. Gleichzeitig wird ein Verschluß hergestellt, um über das Fördermittel das Fördergut in die vorgesehene Richtung zu transportieren.

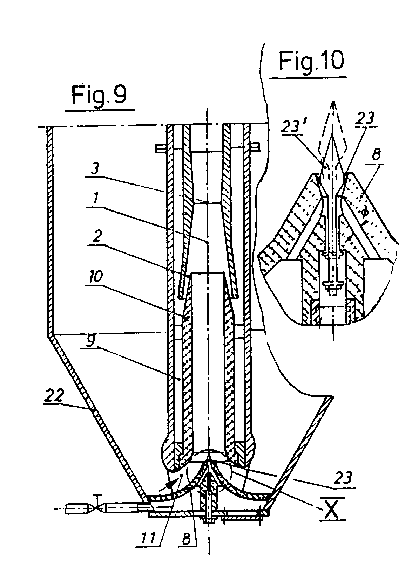

Zu dieser Problemstellung ist aus der Zeitschrift Braunkohle, Heft 2, Februar 1960, Aufsatz "Pneumatische Förderung von Asche", Dr. Trenkler, Seite 62, Abb. 9, ein Düsenförderer bekannt geworden, bei dem das Fördergut über einen Auslaufstutzen eines Behälters einer Auffangschale zugeführt wird. Die Auffangschale ist mit einer Düse versehen, die über eine Druckluftleitung versorgbar ist und besitzt in der axialen Fortführung eine Diffusoranordnung, die mit einer Förderleitung verbunden ist. Hierbei saugt der Düsenstrahl aufgrund der Injektorwirkung oder er durchbricht das in unterschiedlichen Mengen anfallende Materialgehäuf in der Auffangschale mit hoher Geschwindigkeit und reißt entsprechende Materialmengen mit in die Förderleitung. Je nach Materialanfall arbeitet dieser Düsenförderer als Injektor bzw. bei starkem Materialanfall zeitweise auch als Ejektor. Um durch den Düsenstrahl auch maximal anfallende Materialmengen durchdringen zu können und Materialteile in die Förderleitung zu bringen, ist ein relativ großes Fördermittel mit hoher Geschwindigkeit erforderlich, und somit sind entsprechend kostenintensive Energiemengen für den Betrieb aufzuwenden.

Die Mängel dieser Anordnungen bestehen zusätzlich auch darin, daß durch große Fördermittelmengen und dem erforderlichen hohen Druck bei Injektorbetrieb außer dem Fördergut auch zusätzlich Luftmengen angesaugt werden. Wegen einer permanent bestehenden Verstopfungsgefahr in der Förderleitung ist darüber hinaus eine zusätzliche Druckreserve erforderlich. Der an der Düse erforderliche Verdichtungsdruck beträgt etwa das sechs- bis zehnfache gegenüber dem Förderleitungsrückdruck. Aus diesem Grund ist der Einsatz auch aus Verschleißgründen sehr unwirtschaftlich. Dieses ist auch der Fall, wenn derartige Anordnungen für die Förderung kleiner Materialmengen über kurze Entfernungen eingesetzt werden.

Zur Verbesserung wurde vorgeschlagen, einen ZellenradSchleusenförderer bzw. einen Revolverfeeder einzusetzen. Hierbei wird das Material unter Zwischenschaltung einer Zellenradschleuse der Auffangschale zugeführt. Die rotierende Zellenradschleuse hat die Aufgabe, das Fördermaterial aus den einzelnen Zellen schubweise in kleinen Häufchen zuzuführen und gleichzeitig einen Verschluß an der Materialeinlaufseite herzustellen, so daß sich ein geringer Überdruck aufbaut und somit mit etwas höheren Rückdrücken gefördert wird. Der Mangel besteht aber darin, daß jede geleerte Zelle des Zellenrades sowie durch die Spalte zwischen Zellenrad und Gehäuse Fördermittel entweicht und in den zugeordneten Materialbehälter gelangt. Hierdurch wird durch gebildetete Luftblasen die Materialzuführung zum Zellenrad behindert. Es wird deshalb üblicherweise bei derartigen Ausbildungen ein Entlüftungsbehälter zwischen Zellenradschleuse und Materialbehälter angeordnet, aus dem sogenannte Leckluft über eine Rohrleitung entweichen kann.

Ein Revolverfeeder hat einen Funktionsablauf entsprechend einem Zellenrad-Schleusenförderer, jedoch ist keine Auffangschale vorgesehen. Es ist in der Materialzuführung eine Düse zur Förderung angebracht und am gegenüberliegenden Ende ein Förderleitung angeschlossen. Das austretende Fördermittel treibt das in der Zelle befindliche Material in die Förderleitung. Aufgrund der angeordneten Zellenradschleuse wird im Vergleich zum Düsenförderer mit einem höheren Förderdruckaufbau operiert. Da aber nur ein geringer Förderdruckaufbau im System möglich ist, sind zusätzlich erhebliche Fördermittelverluste durch Spalt- und Leckverluste unvermeidlich und auch Materialanbackungen in der Zellenradschleuse nicht auszuschließen. Hierbei tritt ein starker Verschleiß an der Zellenradschleuse auf, und in der Praxis ist diese Anordnung nur für untergeordnete Zwecke einsetzbar.

Für insbesondere senkrechte Förderungen ist eine Ausbildung in Form eines pneumatischen Elevators bekannt geworden. Hierbei ist vorgesehen, einen zylindrischen Behälter mit einem belüftbaren Boden vorzusehen, wobei im Zentrum des Zylinders ein senkrecht angeordnetes Förderrohr angeordnet ist und sich die Transportleitung anschließt. Im Bodenbereich des Behälters ist unterhalb des Förderrohres - in der Fluchtachse - eine Düse vorgesehen. Die Funktion dieses sogenannten Airlift-Sendegerätes besteht darin, daß eine entsprechend hohe Materialsäule die Verschlußfunktion materialseitig bildet und gleichzeitig aufgrund des Materialdrucks das Fördermaterial einer Ejektordüse zuführt, das vom Düsenstrahl erfaßt und in das Förderrohr getrieben wird. Mit dieser Fördermethode ist ein relativ günstiger Wirkungsgrad des Sendegerätes erreichbar.

Die Materialsäule im Behälter steht in Abhängigkeit zum Druckaufbau im Förderrohr, gemäß den Gleichgewichtsbedingungen der Bernoullischen Gleichung, die hierfür vergleichsweise herangezogen wird. Dieser Sendertyp, insbesondere für Senkrechtförderungen, wird entsprechend der Förderhöhe und des Leistungsdurchsatzes bis zu einem Druckaufbau im Förderrohr von ca. 0,6 bar Überdruck betrieben. Entsprechend hoch ist dann die Schüttgutsäule und die Behälterhöhe zu wählen.

Es bestehen aber die Mängel, daß die Düse im Behälterboden zu installieren ist und oberhalb der Düse das zugeordnete Förderrohr sowie die Förderleitung am Behälterdeckel befestigt sind. Diese getrennte Anordnung von Düse und Förderrohr hat häufig große Fluchtfehler oder einen Rohrversatz zur Folge und ist fertigungstechnisch aufwendig. Die Auswirkungen hieraus sind ein schräges und/oder versetztes Einblasen des Düsenstrahls in die Förderleitung und somit erhöhter Verschleiß der Förderleitung sowie eine Ablenkung des Fördermittelstrahls in die Schüttgutsäule des Behälters. Da ferner aus der Düse ein entsprechend starker Düsenstrahl mit hoher Geschwindigkeit austritt und das Material in das über der Düse angeordnete Förderrohr mitreißt, ist nicht zu vermeiden, daß die stark beschleunigten Gasmengen gegen die zu fördernden, jedoch nur gering fluidisierten und teilweise im statischen Zustand befindlichen Materialmengen prallen und dadurch teilweise abgelenkt sowie an der Förderleitung vorbei in die Schütgutsäule getrieben werden. Hierdurch erfolgt eine nicht vorgesehene unkontrollierte Auflockerung der Schüttgutsäule im Bereich des Förderrohres und das Fördermittel muß nach Austreten aus der Schüttgutsäule in eine Entlüftungsleitung geführt werden, wobei dieser Anteil für die Materialförderung verloren ist. Um eine Fehlleitung dieser Gasdruckmengen zu begrenzen, ist zwangsläufig eine Erhöhung der Schüttgutsäule im Behälter erforderlich, damit ein ausreichender materialzulaufseitiger Verschluß dieser Anordnung erzielt und ein erforderlicher Druckaufbau im Förderrohr ermöglicht wird. Ferner bewirkt der Beschleunigungsstoß des Gasstrahls ein Aufeinanderprallen der Materialteilchen im Beschleunigungsbereich. Diese diffusen Zustände bei Einleitung der Förderung haben einen zusätzlichen Energieverlust zur Folge. Bei einem Druckabfall des Fördermittels besteht der Mangel, daß die im Behälterboden befindliche Düse vom Fördermittel zugeschüttet wird. Das Fördergut gelangt trotz eines Rückschlagventils in die Zuführleitung und gegebenenfalls bis in das Verdichteraggregat. Es sind daher entsprechend aufwendige Maßnahmen zu treffen.

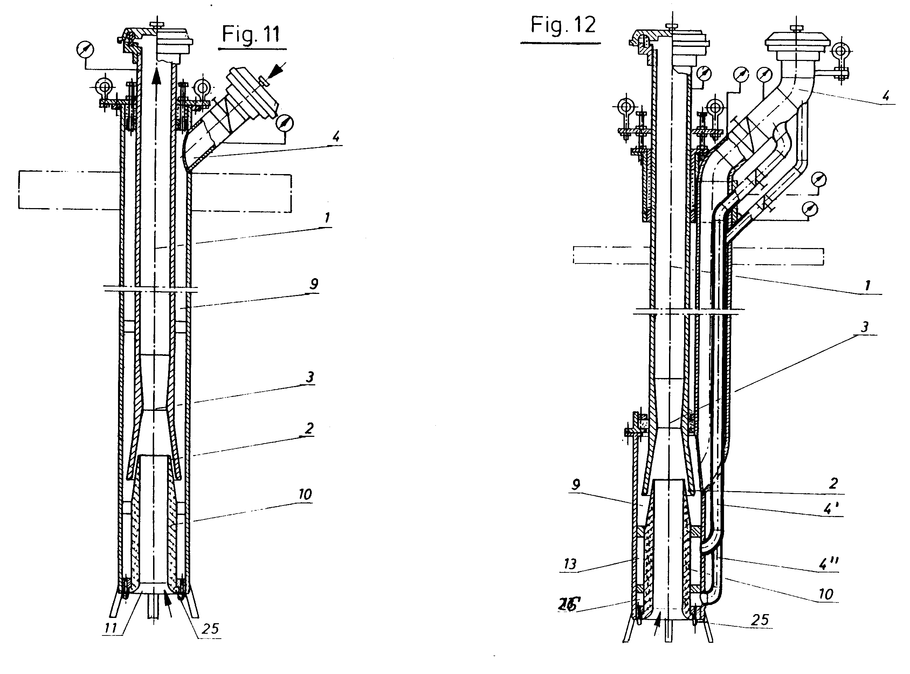

Es ist auch bekannt, ein Schneckenschleusengerät, das als Staubförderpumpe bezeichnet wird, in Förderdruckbereichen von ca. 0,4 bis 2,5 bar Überdruck, in Sonderfällen bis ca. 3,5 bar Förderdruck, für Entfernungen bis etwa 800 m einzusetzen. Diese Ausbildung aus dem vorgenannten Aufsatz der Zeitschrift Braunkohle, Heft 2, Februar 1960, Seite 64, Abb. 11, wird als gattungsbildend angesehen, obwohl es sich hierbei um einen Injektorförderer handelt. Hierbei hat sich der Mangel herausgestellt, daß in vielen Einsatzfällen bereits fluidisiertes Fördergut in einen sogenannten Pumpenaufsatzkasten zum Zwecke einer Entlüftung des Materials gelangt. Das Fördergut wird durch den Einlaufstutzen einer Pumpe zugeführt, in der es von einer Schleusenschnecke als Preßschnecke erfaßt und verdichtet wird, wobei das Gas aus dem Gemisch heraus- und das Fördergut zusammengepreßt wird sowie zur Erzielung eines möglichst gasdichten, jedoch sehr kurzen und stark verdichteten Materialstopfens als Verschluß dient. Die an der Materialverdichtung beteiligten Maschinenteile sind hierbei einem erheblichen Verschleiß unterworfen. Die komprimierte Fördergutmasse wird üblicherweise gegen eine Rückschlagklappe und durch einen erzwungenen Öffnungsspalt in ein mit Druckgas beaufschlagte Auslaufgehäuse gedrückt. Ein anschließendes sofortiges Auflösen des durch eine stoßartige Zerstäubung des stark verdichteten Materialstopfens mit hoher Treibgasgeschwindigkeit des Fördermittelstrahls für eine sofortige Erzielung eines fluiden Fördergutgemisches erfordert einen zusätzlichen Energieaufwand. Eine stoßartige Beschleunigung des Fördergutes mit großen Fördermittelmengen und hoher Geschwindigkeit aus einer oder mehreren Ejektordüsen treibt und reißt das Material mit sich in die Förderleitung. Dieser Vorgang setzt den Wirkungsgrad des Materialsenders zusätzlich herab. Mit der Rückschlagklappe und der Preßschnecke wird eine instabile Abdichtung zur Förderguteinlaufseite erreicht. Der zu bildende kurze Materialstopfen erfordert eine hohe Verdichtung mit entsprechendem Energieaufwand für den Preßschneckenantrieb und ist nur mit entsprechender Abrasion bestimmter Maschinenteile zu erreichen. Ferner wird durch die stoßartige Auflösung (Zerstäubung) der verdichteten Massen ein weiterer Energieaufwand für die Einleitung der Förderung erforderlich. Bei einer derartigen Behandlung des Fördergutes sind bei empfindlichem Fördergut Veränderungen, beispielsweise in der Kornstruktur des Fördergutes, nicht zu vermeiden. Eine Förderung mit einem Sendegerät dieser Art läßt sich somit nur mit den vorgenannten Mängeln betreiben.

Ferner ist es bei dem Einsatz von Druckbehältern zum höheren Druckaufbau bekannt, den Auslaufbereich flaschenhalsförmig einzuschnüren, so daß dort eine Materialverdichtung eintritt, die durch aufwendige Belüftung wieder aufzulockern ist. Hierbei erfolgt die Befüllung des Fördergutes durch eine Einlauföffnung des Behälters von oben und nach dem Befüllen und Schließen der Einlauföffnung mit einem druckdichten Verschlußorgan wird eine entsprechende Druckgasaufgabe auf den Materialspiegel und Belüftung im Bodenbereich vorgenommen. Über eine Materialauslaufklappe im unteren Teil des Druckbehälters erfolgt eine entsprechende elektropneumatische Steuerung in Abhängigkeit des Förderleitungsrückdrucks, so daß eine geregelte Materialzuführung erzielbar ist. Das Fördergut wird dabei über eine sogenannte Blasschale mit einem anschließenden Förderrohr geführt und über eine Förderleitung mitgerissen. Nach Leerung der Behälterfüllung erfolgt eine Druckgasentspannung im Druckbehälter über ein Ventil und das Öffnen der Materialeinlaufklappe für eine erneute Befüllung und einer Wiederholung des Entladevorganges. Hierbei treten die bereits erwähnten Mängel bei Einleitung der Förderung auf, nämlich Beschleunigungsstoß des Fördergutes, und es sind große sowie relativ hoch verdichtete Fördermittelmengen erforderlich. Die sogenannte Schub- oder Taktschubförderung weist geringere Fördergeschwindigkeit auf, und es ist zur Überwindung des Reibungswiderstandes ein hochverdichtetes Fördermittel erforderlich.

Bei einer Druckgefäßvariante mit einem direkten Förderleitungsanschluß an das Druckgefäß entfällt die Blasschale und die Materialauslauf- und -Verschlußklappe, mit der die Regelfunktion durchführbar ist. Diese Elemente werden durch ein Ventil, wie ein Kugelhahn oder eine Schmetterlingsklappe, ersetzt, das direkt in die Förderleitung unmittelbar hinter dem Anschluß an das Druckgefäß eingeschaltet ist. Der Mangel dieser Ausbildung besteht darin, daß komprimiertes Material in den kleinen Rohrquerschnitt zu schieben ist. Ferner tritt beim Öffnen und Schließen bzw. durch ein teilweises Öffnen des Ventils durch die Steuerung starke Abrasion infolge eines auftretenden Sandstrahleffektes ein.

Weiterhin gibt es Druckgefäßausführungen ähnlich DE-A-1 182 594 mit senkrecht in die Materialfüllung eintauchendem Förderleitungsrohr. Dabei wird durch Aufgabe von Druckgas auf den Materialspiegel und gegebenenfalls eine Fluidisierung im Bodenbereich das Material in die Rohrleitung gedrückt und die Förderung eingeleitet. Dieses ist nur mit entsprechend großen Energiemengen durchführbar.

Druckbehälter sind grundsätzlich durch eine intermittierende Betriebsweise im Gegensatz zu den genannten kontinuierlich fördernden Sendegeräten gekennzeichnet.

Die Aufgabe der Erfindung ist es, eine gattungsgemäße Fördervorrichtung zu schaffen, die einen gleichartigen Grundaufbau für alle Einsatzbereiche ermöglicht und einen wirtschaftlichen und schonenden Materialfluß mit geringem Energieaufwand für das erforderliche Fördermittel unter Berücksichtigung eines einfachen mechanischen Aufbaus gewährleistet sowie Emissionen verringert.

Die Lösung dieser Aufgabe erfolgt erfindungsgemäß dadurch, daß ein der Düse vorgeschalteter Einlaßbereich des Rohrelementes zum Eintauchen in das bzw. Zuführen des Fördergutes angeordnet ist, und daß im Einlaßbereich des Rohrelementes eine Fluidisierung entweder durch eine sich im Einlaßbereich befindliche gasdurchlässige Hülse und/oder durch einen gasdurchlässigen Leitkegel erfolgt.

Hierdurch wird eine Anordnung mit einem baukastenartigen Aufbau geschaffen, der entsprechend für alle Bedarfsfälle einsetzbar ist. Es wird die Lagenenergie, die sich aus der Schwerkraft bzw. dem Materialvorschub ergibt, mit in Bewegungsenergie umgesetzt und ist für die Förderung zusätzlich ausnutzbar. Es tritt weiterhin der Vorteil auf, daß durch die Materialfluidisierung das Fördergut mehr aus einem Fördergutgemisch besteht und fontänenförmig infolge der Fördergutsäule bzw. des Materialvorschubs mit zunehmender Geschwindigkeit zur Düse bewegt wird. Von der sich bildenden Druckdifferenz beim Austreten des Düsenstrahls aus der Düse in die Einschnürung wird das Fördergut-Gasgemisch angesaugt und nutzbringend mit einem weiteren Geschwindigkeitszuwachs zugeführt. Das aus der Düse austretende Fördermittel hat somit eine relativ geringe Bewegungsenergie auf das Fördergut-Gasgemisch zu übertragen, um es auf die erforderliche Förderanfangsgeschwindigkeit zu beschleunigen. Somit ist eine erhebliche Herabsetzung der Herstellkosten durch das Rohrelement geschaffen.

Durch die Merkmale der Unteransprüche sind vorteilhafte Ausbildungen der Erfindung gekennzeichnet.

In den Zeichnungen sind Ausführungsbeispiele der Erfindung schematisch dargestellt. Es zeigen:
- Fig. 1: einen Schnitt eines in einen Behälter eingesetzten Rohrelementes mit einem Leitkegel im Einlaßbereich,
- Fig. 2: einen Dichtring für die angeordnete Ringdüse in vergrößerter Darstellung als Einzelheit II der Fig. 1,
- Fig. 3: einen Schnitt gemäß Fig. 1 mit einem abgetrennten durchlässigen Einlaßbereich und gesonderten Fördermittelzuführungen für Düse und Einlaßbereich,
- Fig. 4: eine Ausbildung des durchlässigen Einlaßbereiches in vergrößerter Darstellung gemäß Einzelheit IV der Fig. 2,
- Fig. 5: eine zweite Ausführungsform eines Rohrelementes mit einer Schwerkraftförderung und kontinuierlicher Materialzuführung,
- Fig. 6: eine dritte Ausführungsform eines Rohrelementes mit einer Förderschnecke zur Materialzuführung,
- Fig. 7: eine vierte Ausführungsform eines Rohrelementes entsprechend Fig. 6 zum Einbau in einen Behälter,
- Fig. 8: eine fünfte Ausführungsform als mobile Fördervorrichtung,
- Fig. 9: eine sechste Ausführungsform mit einem Leitkegel im Einlaßbereich und einer Sekundärdüse zur Beschleunigung des Fördergutes,
- Fig. 10: eine vergrößerte Darstellung des Leitkegels gemäß Einzelheit X der Fig. 9,
- Fig. 11: eine siebte Ausführungsform für einen mobilen Einsatz,
- Fig. 12: eine Ausbildung entsprechend Fig. 11 mit einem abgetrennten durchlässigen Einlaßbereich und gesonderten Fördermittelzu führungen für Düse und Einlaßbereich,
- Fig. 13: eine achte Ausführungsform mit einer zentralen Fördermittelzuführung und
- Fig. 14: eine Ausbildung entsprechend Fig. 13 mit einem abgetrennten Einlaßbereich und gesonderten Fördermittelzuführungen für Düse und Einlaßbereich.

Bei den einzelnen Ausführungen ist jeweils ein Rohrelement 1 angeordnet, das mit einer nicht näher dargestellten Förderleitung verbunden ist. Im Rohrelement 1 ist eine Düse 2 integriert, die zur Fördermittelzuführung dient, wobei der Düse 2 eine Einschnürung 3 nachgeschaltet ist. Weiterhin ist der Düse 2 im Rohrelement 1 eine gasdurchlässige Hülse 10 vorgeschaltet, die zur Reibschlußauflösung (Fluidisierung) des Fördergutes und für die Erzeugung eines Fördergut-Gasgemisches dient, wobei dieses der Düse 2 mittels Schwerkraft oder mechanischem Vorschub zugeführt wird. Diese Anordnung bildet dabei ein Sendegerät.

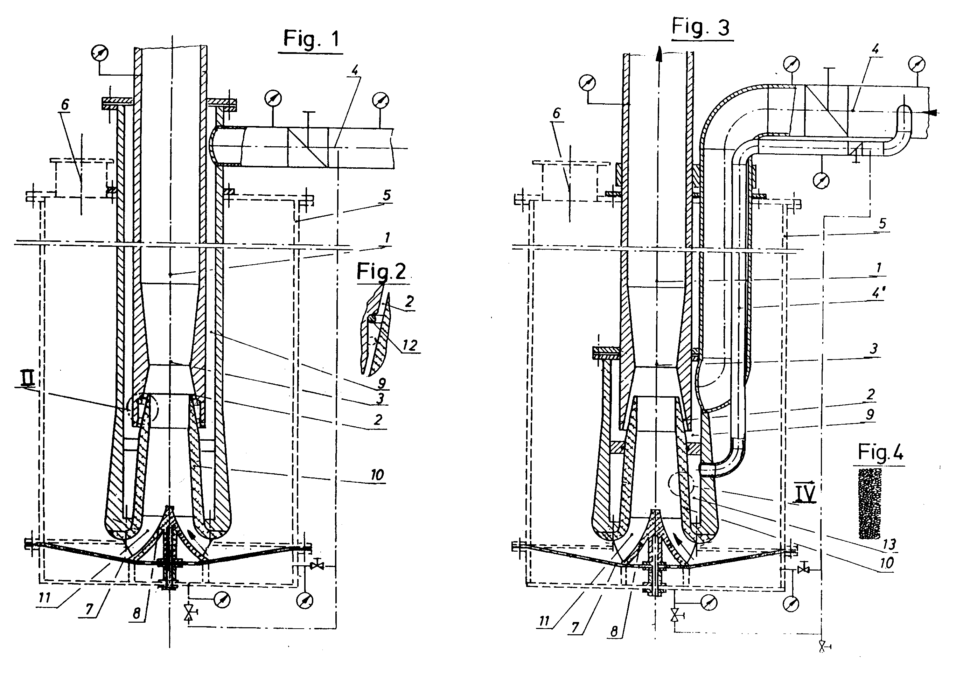

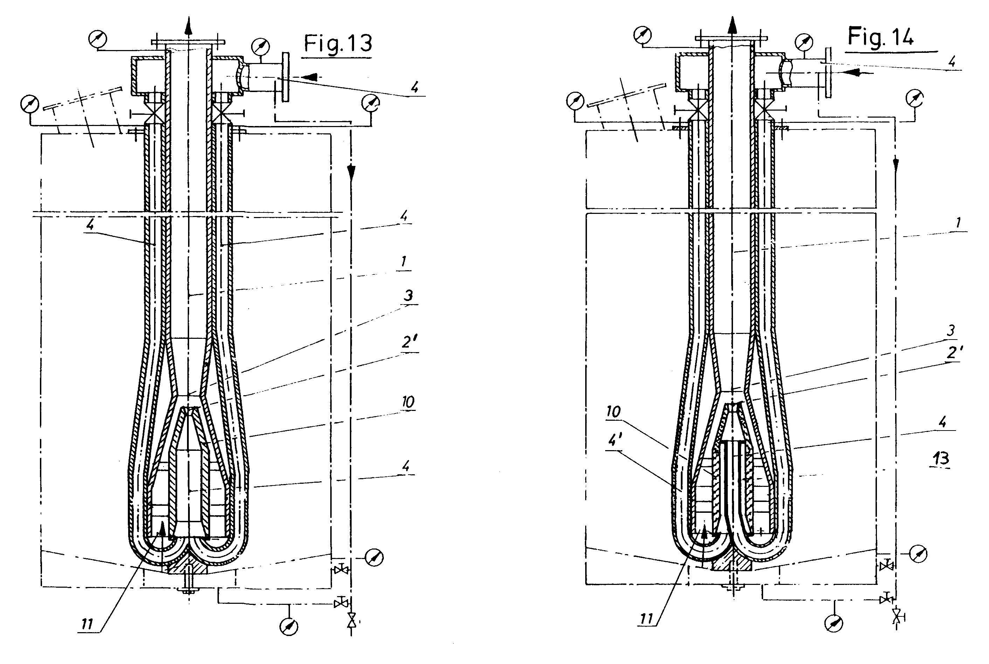

In den Ausbildungen gemäß Fig. 1 bis 12 ist die Düse 2 jeweils als Ringdüse ausgebildet, während in Fig. 13 und 14 eine zentrale Düsenanordnung 2 als Lavaldüse ausgebildet ist. Zur Zuführung des Fördermittels in Form von Druckgas sind Leitungen 4 vorgesehen.

In der Ausbildung gemäß Fig. 1 und 2 ist das Sendegerät 1 bis 3 in einen Behälter 5 eingesetzt, der über eine Öffnung 6 mit Fördergut versorgt wird und einen belüftbaren Boden 7 aufweist. In diesem Fall ist zusätzlich ein belüftbarer Leitkegel 8 angeordnet.

In der Ausbildung gemäß Fig. 1 wird über die Leitung 4 das Druckgas zugeführt und über einen das Rohrelement 1 umgebenden Ringraum 9 der Ringdüse 2 zugeführt. Gleichzeitig wird durch das Druckgas der Einlaßbereich 11 des Rohrelementes 1 mit einer durchlässigen Innenwandung 10 aus porösem Material versorgt, so daß das im Einlaßbereich 11 befindliche Fördergut fluidisierbar ist.

Durch diese Ausbildung wird das eingebrachte Fördergut dadurch transportiert, indem die Materialsäule als Verschluß dient und der durch das zugeführte Druckgas über die Düse 2 gebildete Treibgasstrahl das Fördergut auf die erforderliche Förderanfangsgeschwindigkeit bringt und mit einem durch die Einschnürung 3 gebildeten Diffusor beschleunigt. Hierbei wird das Fördergut im Einlaßbereich 11 durch das über die durchlässige Innenwandung 10 austretende Druckgas fluidisiert. Ferner wird der Fördergutdruck aus der Materialsäule sowie die Druckdifferenz, die aus der Impulsgröße des Fördermittels beim Austreten aus der Düse 2 im Bereich der Einschnürung 3 als Venturirohr resultiert, zur Förderung mit ausgenutzt.

Die Ringdüse 2 besitzt in dieser Ausführung einen durch das Druckgas als Fördermittel anhebbaren Dichtring 12, der den Durchtritt bei Druckabfall verschließt.

Gemäß Fig. 3 ist, abweichend von der Ausbildung gemäß Fig. 1, ein abgeschlossener Raum 13 im Einlaßbereich 11 mit der durchlässigen Innenwand 10 angeordnet. Dieser Raum 13 wird mit einer abgezweigten Leitung 4′ von der Leitung 4 zur Druckgasversorgung gespeist.

Dieses Prinzip des Sendegerätes wird auch bei allen weiteren Ausführungsbeispielen verwirklicht und wird lediglich den auftretenden Bedürfnissen angepaßt.

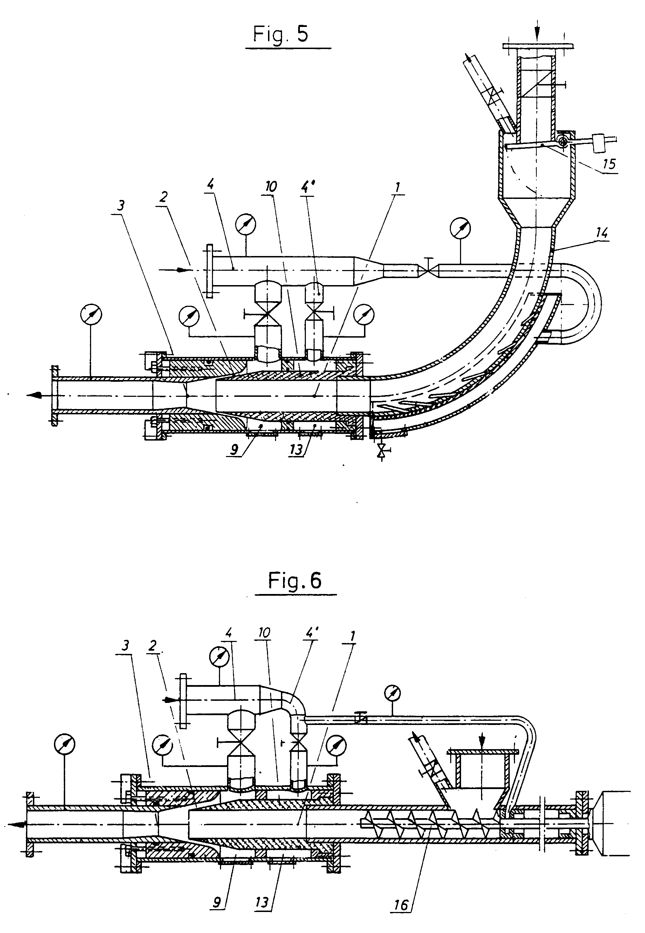

Gemäß Fig. 5 ist eine Ausführung eines Sendegerätes dargestellt, bei dem eine Zuführung des Fördergutes durch Schwerkraft über ein Rohr 14 mit einer Pufferzone 20 erfolgt, das eine Rückschlagklappe 15 aufweist. Alle weiteren Elemente sind mit den vorher beschriebenen Ausführungsbeispielen identisch. Der mit Öffnungen 14' versehene Bogen des Rohres 14 mit mit einer gasdurchlässigen Abdeckung 14˝ versehen, die für eine Fluidisierung des Fördergutes in diesem Bereich ausgebildet ist und funktionell dem belüftbaren Boden 7 entspricht.

In der Ausführung gemäß Fig. 6 ist zur Fördergutzuführung eine Förderschnecke 16 vorgesehen, die auch einen erforderlichen Verschluß herbeiführt.

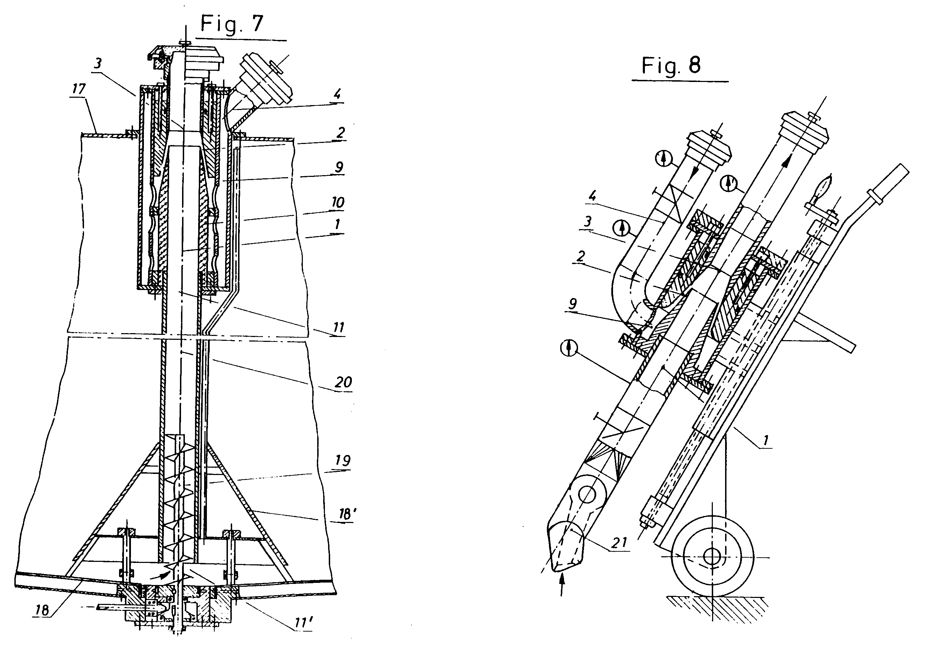

Eine weitere Ausführung eines druckbeaufschlagten Sendegerätes ist in Fig. 7 dargestellt. Der Einsatz erfolgt in einem Behälter 17, wobei ein spitzwinkliger bzw. schwach geneigter belüftbarer Boden 18 vorgesehen ist und von einer abnehmenden Materialsäule ausgegangen wird. Für eine druckentlastete Materialzuführung zur Schnecke 19 ist eine Haube 18′ vorgesehen. Es ist deshalb eine Förderschnecke 19 angeordnet, die das Fördergut in eine Pufferzone 20 bringt. Im Einlaßbereich 11 des Rohrelementes 1 wird eine Expansion herbeigeführt, indem über die durchlässige Innenwandung 10 Druckgas zugeführt wird und somit eine Materialgeschwindigkeit erzeugbar ist. Dieses trifft für alle Ausführungsbeispiele mit durchlässiger Innenwandung 10 zu, wobei die Pufferzone 20 und bei Schwerkraftzuführung gegebenenfalls bei einem mechanischen Materialvorschub gemeinsam die Verschlußfunktion gebildet wird. Ansonsten erfolgt der Transport in der bereits beschriebenen Weise über das mittels der Düse 2 zugeführte Druckgas.

Bei dem Ausführungsbeispiel mit einer mobilen Anordnung gemäß Fig. 8 ist dem Rohrelement 1 ein Saugrüssel 21 vorgeschaltet. Ansonsten ist das Sendegerät gleichartig ausgebildet.

In Fig. 9 ist ein Sendegerät 1 bis 3 in einem Druckbehälter 22 angeordnet, der auch mit einem geneigten Boden entsprechend Fig. 1 und 3 versehen sein kann, jedoch den Druckanforderungen genügt. Diese Anordnung ist für einen höheren Druckaufbau vorgesehen. Nach Befüllung mit dem Fördergut wird hierbei ein Druckgas auf den Materialspiegel aufgebracht. In diesem Fall ist der Leitkegel 8 mit einer zusätzlichen Düse 23 und einer Druckgasversorgung versehen, um eine Vorbeschleunigung zu erreichen. Die Düse 23 wird unabhängig von den Sendegeräten entsprechend dem jeweiligen Bedarfsfall im Leitkegel integriert.

Gemäß Fig. 11 und 12 ist eine mobil einsetzbare Anordnung dargestellt. Der Einlaßbereich 11 ist dabei über Abstandshalter 24 vom Boden gehalten und zusätzlich mit Düsen 25 versehen. Diese Ausbildung dient insbesondere zur Aufnahme von Haufwerken. Der Unterschied der Fig. 11 und Fig. 12 besteht darin, daß in Fig. 12 ein wiederum abgeschlossener Raum 13 mit einer Leitung 4′ zur Druckgaszuführung vorgesehen ist. Zusätzlich ist ein Raum 26 mit einer Leitung 4˝ zur Versorgung der Düsen 25 vorgesehen, um eine Fluidisierung des Fördergutes im peripheren Einlaßbereich des Rohrelementes zu erreichen.

Die Anordnungen gemäß Fig. 13 und 14 zeigen abweichend von den bisher behandelten Ausführungsbeispielen eine Ausbildung mit einer zentralen Düse 2' in Form einer Lavaldüse. Hierbei wird über Leitungen 4 das Druckgas zugeführt, wobei in der Fig. 14 wieder eine Leitung 4′ zum abgetrennten Raum 13 geführt ist, um den durchlässigen Bereich 10 im Eingangsbereich 11 für eine Fluidisierung zu versorgen.

Im Bedarfsfall kann für einen höheren Druckaufbau im System eine zusätzliche Zuführungsschnecke mit nachgeschalteter Rückschlagklappe vorgesehen werden. Dadurch ergibt sich eine stufenförmige Abdichtung, und es werden auftretende Verschleißerscheinungen gemindert.

Die dargestellten Sendegeräte sind, ausgenommen die Sendegeräte mit einer Förder-Zuführschnecke gemäß Fig. 6 und 7, für eine Förderung dickflüssiger Stoffe, wie Schlämme (Klärschlamm), auch in Form verschmutzter, sandiger, abrasiver und/oder aggressiver Schlämme, geeignet, die aufgrund ihrer Konsistenz mit herkömmlichen Förderpumpen nicht oder nur bedingt förderbar sind.

Für eine Fluidisierung des Behälterbodens und des Einlaßbereiches im Rohrelement sind diese dann mit entsprechend geeigneten durchlässigen Böden und Innenwandungen im Einlaßbereich auszurüsten.

Für eine Förderung derartiger Schlämme wird gegebenenfalls zusätzlich oder nur ein dünnflüssiges Medium als Fördermittel vorgesehen, das in herkömmlichen Pumpenaggregaten den für die Förderung erforderlichen Druckaufbau erfährt. Somit ist Fördergut mit hoher Viskosität in dieser Form rationell mit einem Medium geringerer Viskosität als Fördermittel in Rohren förderbar.

## Patentansprüche

1. Fördervorrichtung in Form eines Sendegerätes für staubförmige oder feinkörnige Güter zum Transport in Förderleitungen mit einem Gas, insbesondere Luft, als Fördermittel, wobei das Sendegerät als ein einer Förderleitung vorgeschaltetes Rohrelement (1) ausgebildet ist, und wobei das Gas dem zu transportierenden Fördergut im Bereich eines Einlasses (11) des Rohrelementes (1) über eine zugeordnete Düse (2) zugeführt wird, und wobei eine Abdichtung vor dem Einlaß (11) durch das nachströmende Fördergut durchführbar ist, wobei das Rohrelement (1) eine integrierte Düse (2) zur Fördermittelzuführung und eine der Düse nachgeschaltete Einschnürung (3) aufweist, dadurch gekennzeichnet, daß eine der Düse (2) vorgeschalteter Einlaßbereich (11) des Rohrelementes (1) zum Eintauchen in das bzw. Zuführen des Fördergutes angeordnet ist, und daß im Einlaßbereich (11) des Rohrelementes (1) eine Fluidisierung entweder durch eine sich im Einlaßbereich (11) befindliche gasdurchlässige Hülse (10) und/oder durch einen gasdurchlässigen Leitkegel (8, 10) erfolgt.

2. Fördervorrichtung nach Anspruch 1, dadurch gekennzeichnet, daß die Düse als Ringdüse (2) ein über das Fördermittel anhebbare Dichtring (12) zugeordnet ist, der bei Druckabfall die Ringdüse (2) durch Schwerkraft verschließt.

3. Fördervorrichtung nach Anspruch 1, dadurch gekennzeichnet, daß eine zentrale Düse (2') angeordnet ist und ein Ring zur Fördergutzuführung gebildet ist, wobei die zentrale Düse (2') von einer gasdurchlässigen Hülse (10) mit nachgeordnetem Leitkegel gebildet ist.

4. Fördervorrichtung nach Anspruch 3, dadurch gekennzeichnet, daß die Düse (2') als Lavaldüse ausgebildet ist.

5. Fördervorrichtung nach einem der Ansprüche 1 bis 4, dadurch, daß die Fördermittelzuführung (4) zur Düse (2) über eine gemeinsame Versorgung, wie einen Ringraum (9), für den durchlässigen Einlaßbereich (11) des Rohrelementes (1) zur Materialfluidisierung geführt ist.

6. Fördervorrichtung nach einem der Ansprüche 1 bis 5, dadurch gekennzeichnet, daß die Fördermittelzuführung (4) zur Düse (2) und zu einem getrennten durchlässigen Einlaßbereich (11) des Rohrelementes (1) zur Materialfluidisierung über separate Fördermittelzuführungen (4,4') erfolgt.

7. Fördervorrichtung nach einem der Ansprüche 1 bis 6, dadurch gekennzeichnet, daß dem Einlaßbereich (11) des Rohrelementes (1) ein Leitkegel (8) zugeordnet ist.

8. Fördervorrichtung nach Anspruch 7, dadurch gekennzeichnet, daß der Leitkegel (8) mit einer Druckmittelzuführung verbunden ist und Düsen (23) bzw. einen durchlässigen Bereich zur Materialfluidisierung aufweist.

## Claims

1. Feed device in the form of a transmitting appliance for powdery or fine-grained materials to be transported in feed lines with a gas, in particular air, as a conveying means, wherein the transmitting appliance takes the form of a tubular element (1) connected in front of a feed line, and wherein the gas is supplied in the region of an inlet (11) of the tubular element (1) through an associated nozzle (2) to the material to be conveyed, and wherein a seal in front of the inlet (11) may be effected by the slipstream of the material to be conveyed, wherein the tubular element (1) has an integrated nozzle (2) for supplying the conveying means and a constriction (3) downstream of the nozzle, characterized in that an inlet region (11) of the tubular element (1) disposed upstream of the nozzle (2) is arranged so as to dip into or feed the material to be conveyed, and that in the inlet region (11) of the tubular element (1) a fluidization is effected either by a gas-permeable sleeve (10) situated in the inlet region (11) and/or by a gas-permeable guide cone (8, 10).

2. Feed device according to claim 1, characterized in that associated with the nozzle in the form of a ring nozzle (2) is a sealing ring (12), which may be lifted by the material to be conveyed and in the event of a pressure drop closes the ring nozzle (2) as a result of the force of gravity.

3. Feed device according to claim 1, characterized in that a central nozzle (2') is disposed and a ring for supplying the material to be conveyed is formed, the central nozzle (2') being formed by a gas-permeable sleeve (10) with a downstream guide cone.

4. Feed device according to claim 3, characterized in that the nozzle (2') takes the form of a Laval nozzle.

5. Feed device according to one of claims 1 to 4, in that the conveying means supply line (4) to the nozzle (2) is conveyed via a common supply, such as an annular chamber (9), for the permeable inlet region (11) of the tubular element (1) for material fluidization.

6. Feed device according to one of claims 1 to 5, characterized in that the conveying means supply line (4) to the nozzle (2) and to a separate permeable inlet region (11) of the tubular element (1) for material fluidization is effected via separate conveying means supply lines (4, 4').

7. Feed device according to one of claims 1 to 6, characterized in that a guide cone (8) is associated with the inlet region (11) of the tubular element (1).

8. Feed device according to claim 7, characterized in that the guide cone (8) is connected to a pressure medium supply and has nozzles (23) and/or a permeable region for material fluidization.

## Revendications

1. Dispositif de transport sous la forme d'une station d'envoi de matières pulvérulentes ou poudreuses à l'aide d'un gaz, et particulièrement de l'air, comme moyen de transport, dans des conduits dans lequel la station d'envoi est conçue comme un élément de tête de conduit (1) et dans lequel le gaz est appliqué à la matière à transporter au niveau de l'admission (11) de l'élément de conduit (1) par une tuyère (2) y accouplée et où l'obturation par la matière en mouvement est réalisable en amont de l'admission (11), l'élément de conduit (1) consistant en une tuyère combinée (2) d'alimentation en matière à transporter et en un étranglement (3) en aval de la tuyère,
caractérisé en ce qu'une section d'admission (11) de l'élément de conduit (1) en amont de la tuyère (2) est disposée pour soit être plongée dans la matière à transporter soit pour recevoir ladite matière et en ce que la fluidisation au niveau de l'admission (11) de l'élément de conduit est obtenue soit par une douille (10) perméable au gaz et/ou par un cône de guidage (8, 10) perméable au gaz.

2. Dispositif de transport selon la revendication 1, caractérisé en ce que la tuyère sous forme de tuyère annulaire (2) est munie d'un anneau d'obturation (12) maintenu levé par la matière à transporter et qui obture la tuyère annulaire (2) par gravité en cas de perte de pression.

3. Dispositif de transport selon la revendication 1, caractérisé en ce qu'il est prévu une tuyère centrale (2') et la formation d'un anneau d'admission de matière à transporter, dans lequel la tuyère centrale (2') est composée d'une douille (10) perméable au gaz et d'un cône de guidage en aval.

4. Dispositif de transport selon la revendication 1, caractérisé en ce que la tuyère (2) est de type Laval.

5. Dispositif de transport selon les revendications 1 à 4, caractérisé en ce que l'admission de la matière de propulsion (4) dans la tuyère (2) pour la fluidisation de la matière à transporter est assurée par une alimentation commune, telle une cavité annulaire (9), de la section perméable d'admission (11) de l'élément de conduit (1).

6. Dispositif de transport selon les revendications 1 à 5, caractérisé en ce que l'admission de la matière de propulsion (4) dans la tuyère (2) et dans la section perméable d'admission (11) séparée de l'élément de conduit (1) pour la fluidisation de la matière à transporter est acheminé par des admissions séparées (4,4') de matière de propulsion.

7. Dispositif de transport selon les revendications 1 à 6, caractérisé en ce que l'on ajoute un cône de guidage (8) à la section d'admission (11) de l'élément de conduit (1).

8. Dispositif de transport selon la revendication 7, caractérisé en ce que le cône (8) est raccordé à une alimentation en matière de propulsion et que ledit cône est muni d'injecteurs (23) ou d'une section perméable pour la fluidisation de la matière.
